# EUROPEAN PATENT APPLICATION

(11) **EP 2 988 141 A1**
(43) Date of publication of application: **24.02.2016**
(21) Application number: 14181467.3
(22) Date of filing: 19.08.2014
(51) Int. Cl.: G01R 31/28, G01R 31/30, G01R 31/317

(54) **Aging control of a system on chip**

(71) Applicant: Nagravision S.A., 1033 Cheseaux-sur-Lausanne (CH)
(72) Inventor: Favi, Claudio, 1867 Ollon (CH); Macchetti, Marco, 22070 Casnate con Bernate (IT); Osen, Karl, 1974 Arbaz (CH)
(74) Representative: Leman Consulting S.A.

(57) **Abstract**

A method to control aging of a system on chip comprising one or more devices including semiconductor circuit components and at least one aging controller monitoring electrical signals circulating inside the system on chip. The method comprises steps of stressing at least one device of the system on chip by varying hardware parameters related to its operating mode, comparing at least one parameter associated to an electrical signal produced by the at least one device with a reference parameter to determine a difference corresponding to an operating age value of the at least one device, if the operating age value equals or exceeds a threshold age value, determining a stress state value and modifying the operating mode of the at least one device according to the stress state value. A system on chip performing the method as well as an aging controller included in the system on chip are also disclosed.

## Description

### Field of the invention

The present invention relates to security measures implemented in the hardware of systems on chip built on integrated circuits used for example in conditional access systems managing user rights for accessing multimedia content. In particular, aging or reliable operating lifetime time is controlled by hardware devices implemented in the system on chip.

### Technical background

The reliability of semiconductor components decreases during operational use. In fact, they are exposed to variable operational constraints such as temperature and voltages. These constraints cause aging effects which are proportional to cumulated stress due to temperature and voltage during operation and varying according to parts more or less involved in a system on chip.

One such aging effect is Hot Carrier Injection (HCI) resulting when charge carriers become trapped within the gate oxide of CMOS (Complementary Metal Oxide Semiconductor) transistors. The trapped charge carriers accumulate over time, creating a built-in charge within the gate oxide of the transistors. This trapped charge decreases the carrier mobility across the channel of the transistors and alters the transistors threshold voltage. The Hot Carrier Injection is aggravated by increasing operating temperatures and voltage, and has a cumulative effect proportional to age.

Another aging effect is Positive Bias Temperature Instability (PBTI) affecting NMOS transistors or Negative Bias Temperature Instability (NBTI) affecting PMOS transistors caused by an electrochemical reaction that involves the electric field, holes, silicon-hydrogen bonds, and temperature. During operation, DC bias voltages generate interface traps between the gate oxide and silicon substrate of a NMOS or PMOS transistor. These interface traps accumulate over time and have the effect of shifting the threshold voltage and reducing drive current and the speed of CMOS transistors.

The HCI and BTI effects may eventually join together and form a conductive path through a gate stack in a process known as Time Dependent Dielectric Breakdown

(TDDB). For example the document entitled "On-Chip Circuits for Characterizing Transistor Aging Mechanisms in Advanced CMOS Technologies" by John Patrick Keane, University of Minnesota, April 2010, describes in detail the different CMOS transistors aging effects.

The speed degradation due to transistors aging may be directly measured with on-chip sensors, for example to optimize the circuit clock speed as suggested by recent publications and technology trends, cf. document "Transistor Aging" - IEEE Spectrum of July 2013. Measurement of gate aging may be realized by observing the speed of ring oscillators on any existing electrical path inside a system on chip.

Accordingly, different internal components of an integrated circuit have varying reliable lifetimes depending on localized environments subjected to localized operational voltages and temperatures and on specific stress history of the circuit component. Components residing in high-use, high-stress environments will have shorter reliable lifetimes.

In the field of pay-TV, conditional access systems (CAS) or digital rights management (DRM) schemes have as primary goal to warrant that only entitled customers may access media content. A high level of security is usually attained if the rights management at the client side is based on dedicated hardware secure tokens (such as smart cards), which embed private secure multiple-time programmable memories such as flash storage.

One feature of CAS systems is to ensure that users actually pay for content they are viewing; a known technique is based on the purchase of credits or "coins" that may be spent over time. An electronic "wallet" containing the coins is usually made up of a file stored on a persistent memory such as flash memory. The electronic wallet is usually tied uniquely to a given chip, which embeds a unique identifier (UID), so that users cannot share the credit. The chip UID is usually permanently programmed on-chip, and this is generally done with a One-Time Programmable (OTP) memory or fuses.

Fuses may play a central role in design of a system configuration and security. Their implementation in deep-submicron technologies is generally done with expensive analog semiconductor intellectual property core, (IP core). Moreover, the security of the implementation is left to the IP core provider.

### Summary of the invention

An aim of the invention is to overcome the above mentioned drawbacks of the known concept of fuses implemented in systems on chip requiring high security hardware and software functionalities.

According to one embodiment, it is proposed a method to control aging of a system on chip comprising one or more devices including semiconductor circuit components and at least one aging controller in charge of monitoring electrical signals circulating inside the system on chip, each device having a plurality of operating modes, the method is characterized in that it comprises steps of:
- stressing, by the aging controller, at least one device of the system on chip by varying hardware parameters related to operating modes of said at least one device,
- comparing, by the aging controller, at least one parameter associated to an electrical signal produced by the at least one device with a reference parameter to determine a difference corresponding to an operating age value of the at least one device,
- if the operating age value equals or exceeds a predetermined threshold age value, determining a stress state value,
- encoding the stress state value as a binary value associated to each device, and modifying the operating mode of the at least one device or a global behavior of the system on chip according to an array of values formed by one or more binary values.

According to one embodiment, it is further proposed a system on chip configured to control aging of one or more devices including semiconductor circuit components, and at least one aging controller monitoring electrical signals circulating inside the system on chip, each device having a plurality of operating modes, the system is characterized in that the aging controller is configured to:
stress at least one device of the system on chip, by varying hardware parameters related to operating modes of said at least one device,
compare at least one parameter associated to an electrical signal produced by the at least one device with a reference parameter to determine a difference corresponding to an operating age value of the at least one device,
determine a stress state value if the operating age value equals or exceeds a predetermined threshold age value,
encode the stress state value as a binary value associated to each device, and to modify the operating mode of the at least one device or a global behavior of the system on chip according to an array of values formed by one or more binary values.

According to another embodiment, it is proposed an aging controller comprising at least one ring oscillator circuit intended to be associated to a device of a system on chip, said device having a plurality of operating modes, the ring oscillator circuit being made up of a chain including an odd number of CMOS inverters connected in series where the output of the last inverter is fed back as input of the first inverter, the aging controller is characterized in that it further comprises:
- an input interface configured to receive stressing commands acting on hardware parameters related to operating modes of the ring oscillator circuit,
- a first comparator configured to compare the signal frequency with a reference frequency and to determine a difference showing a decrease of the signal frequency corresponding to an operating age value of the ring oscillator,
- a second comparator configured to compare the operating age value with a threshold age value and to output a stress state value intended to modify the operating mode of the device of the system on chip.

In one mode of the invention, the aging is controlled on devices such as crypto-processors, memory management units, memories, communication interfaces, etc. by monitoring an oscillator circuit which is stressed by commands for varying hardware parameters of the oscillator such as increasing DC supply voltage, setting AC bias voltage, or current in resistor increasing oscillator circuit temperature or a combination thereof. These hardware parameters related to operating conditions of the oscillator affect the signal frequency which decreases proportionally to the operating time and to the stress applied during a given time or periodically.

The oscillator signal frequency is compared with a reference frequency generated for example by an unstressed oscillator in order to determine a difference showing a decrease of the oscillator signal frequency. The frequency difference represents an operating age value of the at least one device associated to the oscillator. If the operating age value equals or exceeds a predetermined threshold age value, a stress state value is determined for example in form of a bit passing from a value 0 to a value 1 or inversely.

The stress state value is monitored in order to determine an age of one or more devices and modify the operating mode of the devices for example by disabling functionalities. In general, several oscillators each associated to one or more devices are stressed in different manners and their individual stress state values may be stored in a memory in form of an array of values indicating a global aging state of the system on chip.

The array of values may be in the form of a string of bits, a table or an array in which each element representing a stress state value is associated with a device of the system on chip. According to an embodiment, a stress state value may be compared with a threshold associated with a device allowing determining if a device is stressed more intensively in relation to other devices. In case, one or more devices show a threshold exceeding, a global behavior of the system on chip may be modified as for example by restricting or disabling functions thereof.

The aging depends also on the operation mode of the system on chip which devices execute numerous functions going from a stand-by state with negligible or low constraints on the semiconductor components until a high activity rate which leads to stress the oscillator intensively.

According to an embodiment, the aging controller may act on other parameters of the electrical signals than the frequency of a ring oscillator, namely timing parameters such as transition time or propagation time of signals produced by the devices of the system on chip. In fact, the aging which decreases oscillator frequency, increases signal propagation time or transition time in relation with a corresponding reference signal.

### Brief description of the drawings

The invention will be better understood with the following detailed description, which refers to the attached figures given as non-limitative examples.
Figure 1 shows a diagram of a system on chip according to one embodiment of the invention configured to control aging of various devices by stressing ring oscillators associated thereto.
Figure 2 shows an example of measured variations of a ring oscillator frequency depending on time and stress caused by over voltage which accelerates the aging.
Figure 3 shows line charts of frequency variations in function of time for a stressed and an unstressed ring oscillator.

### Detailed description

According to a preferred configuration, the aging controller is based on ring oscillator RO circuits implemented in the system on chip SOC for measuring the devices aging. A ring oscillator RO circuit comprises at least one inverting element or inverter and a delay element consisting of a buffer, capacitance or an even number of inverters. A well known configuration includes a chain of an odd number of CMOS inverters connected in series where the output of the last inverter is fed back as input of the first inverter forming thus a ring.

A real ring oscillator RO only requires power to operate; above a certain threshold voltage, oscillations begin spontaneously. To increase the frequency of oscillation, two methods are commonly used. Firstly, the applied voltage may be increased; this increases both the frequency of the oscillation and the current consumed. The maximum permissible voltage applied to the circuits limits the speed of a given oscillator. Secondly, a smaller number of inverters in the ring results in a higher frequency of oscillation for a given power consumption. The fundamental frequency F_{osc} at a given supply voltage is calculated by F_{osc} = 1/(N*T) where N represents the number of inverters in the ring and T the time delay for a single inverter.

As the effects of aging impact the switching speed of transistors by rendering them slower, a ring oscillator RO with 10 to 100 MOSFET transistors will see its fundamental frequency slowing with time. The variation with time is thus directly proportional to number of transistors respectively inverters included in the ring oscillator. The variation may be increased by stressing the ring oscillator RO circuit in different ways, such as applying a DC over-voltage, an AC voltage bias, a current increase in a resistor inducing a higher temperature than a normal operating temperature or a combination thereof. The interesting part is that the aging of transistors cannot be reversed.

The documents below describe aging causes and effects observed in CMOS process technology:
[1] "Transistor Aging" - IEEE Spectrum of July 2013 (http://spectrum.ieee.org/semiconductors/processors/transistor-aging/0)
[2] Radic: A Standard-Cell-Based Sensor for On-Chip Aging and Flip-Flop Metastability Measurements, Xiaoxiao Wang et al., University of Connecticut (www.engr.uconn.edu/~tehrani/publications/itc-2012-1.pdf)
[3] On-Chip Circuits for Characterizing Transistor Aging Mechanisms in Advanced CMOS Technologies" by John Patrick Keane, University of Minnesota, April 2010 (conservancy.umn.edu/bitstream/123382/1/Keane_umn_0130E_10992.pdf)
[4] ANALYSIS OF IMPACT OF TRANSISTOR AGING EFFECTS ON CLOCK SKEW IN NANO-SCALE CMOS by Mandeep Singh Randhawa, San Francisco State University, California, May 2011 (userwww.sfsu.edu/necrc/fiies/thesis/thesis_report_Mandeep.pdf)
[5] An On-Chip Test Clock Control Scheme for Circuit Aging Monitoring by Hyunbean Yi, JOURNAL OF SEMICONDUCTOR TECHNOLOGY AND SCIENCE, VOL.13, NO.1, FEBRUARY, 2013 (www.jsts.org/html/journal/journal_files/2013/02/Year2013Volume13_01_11.pdf)

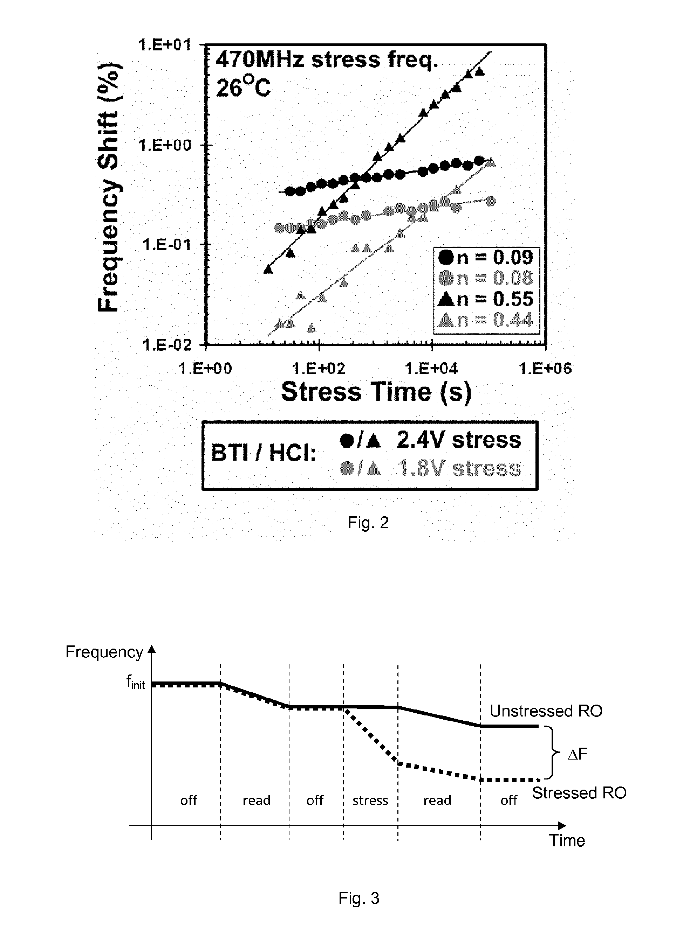

There are several causes for gate aging including Hot Carrier Injection (HCI), Bias Temperature Instability (BTI) and Time Dependent Dielectric Breakdown (TDDB) or Oxide Breakdown. All these phenomena contribute to the variation of the threshold voltage of MOS transistors used in a large scale in integrated circuits, and have the global effect of gradually slowing down the gate speed over its lifetime. This slow-down may be directly measured with on-chip sensors, for example to optimize the circuit clock speed as suggested by document [1]. Measurement of gate aging may be realized by observing the speed of ring oscillators. Figure 2 taken from document [3] shows variations in percent (%) of ring oscillator frequency depending on stress time in seconds (s), and when oscillators are stressed with over-voltage. These results verify that BTI is at most weakly dependent on frequency, while HCI degrades with increased switching activity. More switching leads to an increase in current driven through the channels of the device under test, meaning more hot carriers are present. A decrease in the power law exponent (n) of HCI may be observed at higher frequencies, which is apparently due to the quick saturation of degradation in this case. Both aging mechanisms BTI and HCI degrade with voltage and a decrease in HCI's power law exponent (n) at lower voltages may be observed. This has been explained by a possible decreasing contribution of broken Si-O (Silicon-Oxide) bonds at lower voltages, closer to real operating conditions. The circuit or gate aging measurement may thus be based on any existing electrical path inside a complex system on chip.

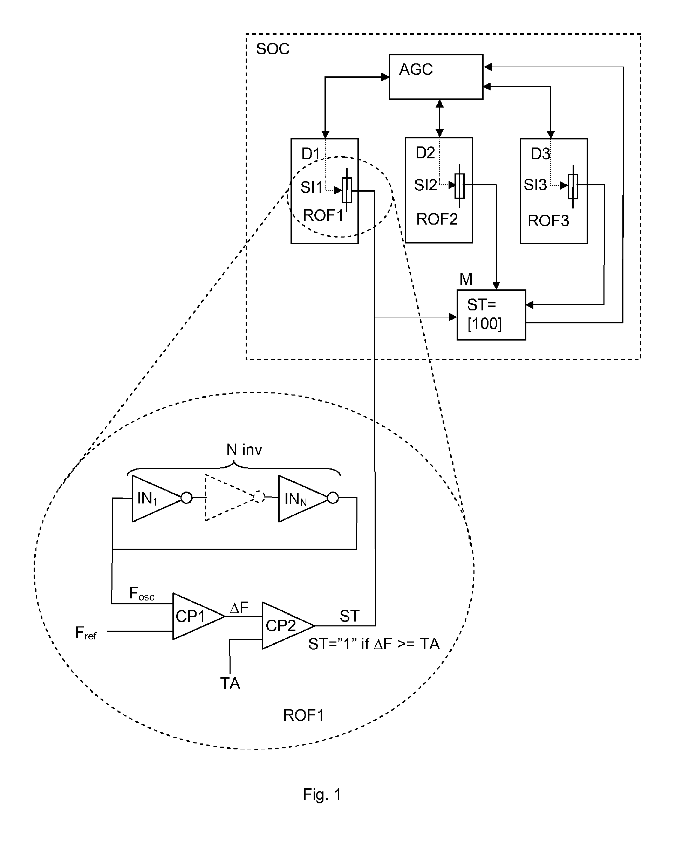

The system on chip according to one embodiment of the invention represented by the diagram of figure 1 aging of devices D1, D2, D3 is controlled by an aging controller AGC, each device including semiconductor circuit components. The aging controller AGC, generally in form of a hardware device operating with a dedicated software program, addresses commands SI1, SI2, SI3 to the associated ring oscillators RO, i.e. locally connected to each device D1, D2, D3, in order to stress them. These commands act, during a predetermined time or within time periods, on the above mentioned hardware parameters in order to accelerate aging of the ring oscillator corresponding to the aging of the associated device D1, D2, D3.

The system on chip SOC operates within operating modes depending on required functionalities. Most preferably in the example of a pay-TV set top box, the system on chip may be included in a security module involved in data encryption / decryption operations, user rights validity time checking, credit and debit management for content viewing, etc.

The aging of selected devices is accelerated according to their functions by increased stress application through a higher supply voltage in relation to the other devices. Particular commands may thus manage the stress of the ring oscillators associated to the selected devices by increasing their activity rate, power supply voltage or current values contributing also to increase operating temperature. In a stand-by mode of the system on chip, some devices may still fully operate while others are switched off so that devices having, for example, a sophisticated security function will expire faster than the ones having only basic functions.

According to a preferred embodiment, each device D1, D2, D3 may be associated with a specific oscillator circuit called hereafter ring oscillator fuse ROF. The term "fuse" means that the ring oscillator is capable to modify or disable some features of a device when a given operating age value is reached.

The oscillator circuit, preferably in form of a ring oscillator composed by an odd number N of inverters IN₁... IN_{N}, generates a signal having a frequency F_{osc} during operating of the system on chip SOC. The ring oscillator operates as well as under normal or unstressed operating conditions as under stressed conditions according to the commands SI1, Si2, SI3 received from the aging controller AGC.

A first comparator CP1 compares a value of the F_{osc} with a reference frequency value F_{ref} stored for example in a non-volatile set up memory of the system on chip SOC during an initialization or personalization phase.

The reference frequency F_{ref} may be common to all devices D1, D2, D3 or specific to each device or a predefined group of devices depending on their activity rate.

According to an embodiment, the reference frequency value F_{ref} may correspond to a frequency of a clock signal generated by a reference generator placed inside or outside the system on chip SOC.

When the oscillator signal frequency F_{osc} value differs with the reference frequency value F_{ref}, the first comparator CP1 determines a difference value ΔF corresponding to an operating age of the concerned device D1. Each device D1, D2, D3 of the system on chip SOC may be preferably associated with its own ring oscillator fuse device ROF to enable aging devices selectively. As each device D1, D2, D3 has its specific activity rate, aging effects measured by decrease of the oscillator signal frequency F_{osc}, in relation to the reference frequency F_{ref}, are also device specific.

The operating age value at the output of the first comparator CP1 is compared by a second comparator CP2 with a threshold operating age value TA specific to the device to which the ring oscillator is associated. This threshold operating age value TA is initially stored in a set up memory of the system on chip SOC in a similar way than the reference frequency value F_{ref} according to the concerned embodiment.

Using two comparators has the advantage to allow specific comparisons between different values of reference frequency as well as different values of threshold age according to the functionalities of the different devices composing the system on chip SOC.

If the operating age value is equal or greater than the threshold operating age value TA, the second comparator CP2 outputs for example a binary value 0 or 1 corresponding to a stress state value ST. In a preferred embodiment a stress state value bit set at 1 corresponds to a reached operating age value, i.e. the operating age value represented by ΔF is equal or higher than the threshold age value TA.

According to an embodiment, the frequency difference value ΔF corresponding to an operating age value may be compared to more than one threshold operating age value to provide differentiated stress state values. For example, depending on applied stress, the operating age value reaches a first threshold value TA1 indicated by a first state ST1, then after certain time and stress applied, the operating age value reaches a second threshold value TA2 indicated by a second state ST2, and so on until to a final threshold operating age value TAn. The granularity, i.e. the number of threshold values and the intervals between the threshold operating age values depends on the required information about aging progress in function of device activity rate and applied stress. The operating mode of the concerned device may thus also depend on the different reached threshold age value. In this case, a stress state values table may be established showing the different threshold age value and time period needed to reach them under predefined stress conditions and device operating mode.

### String of bits

According to an embodiment, the stress state value associated with each device may form a bit in a string of bits where for example each bit set at 1 corresponds to a reached or exceeded operating age value of said device. In another embodiment, the stress state value may be encoded by a set of bits 0 and 1 and the string results from a concatenation of the sets representing each device stress state value.

### Global counter

A counter can be used to determine the general state of the chip. Before a verification process, the counter is initialized. At each device verification, the counter is updated if the age value equals or exceeds a predetermined threshold age value. At the end of the process, the value of the counter represents the number of devices exceeding the threshold showing a global state of the system on chip. Appropriate actions can be taken if the counter reaches a predefined threshold.

### Device counter

According to a further embodiment, a counter associated with each device may be updated when an operating age value is reached or exceeded. An update of the counter means that the counter is incremented from a start value (in general set up to zero) or decremented from a predetermined value set up during an initialization or personalization phase of the system on chip. In this case, each stress state value corresponds to the value of the counter which may be used to form a string of values by concatenation as in the string of bits embodiment for example.

### Dual thresholds

According to a further embodiment, a threshold stress state value may be attributed to each device. During the comparison with the predetermined threshold age value, the difference between the operating age value and the predetermined threshold age value is stored as a device state stress value. Once all devices are stressed, the array of values represents the behavior of the chip. A further global aging value can be determined for example by summing all stress state values to obtain a global stress state value. The difference of this approach is to give a different weight per device. In the bit approach (see above), each device has the same weight and the global state value is determined according to the number of bits (i.e. device) exceeding the threshold. In the dual threshold approach, in case that a stress state value exceeds the threshold by a high difference, this difference only can trig the modification of the operating mode.

### Example

The table below shows an example with 3 devices D1, D2, D3 having each an individual threshold age value DTA. The current stress state value ST of a current device is compared with this threshold DTA to determine the threshold exceeding value TE. In case that the current stress state value ST is below the threshold DTA, the result TE is set to zero. In the other cases, the result value TE can be further normalized in respect with the device threshold age value DTA to take into account the absolute variation of each threshold DTA. In the example, a threshold exceeding rate TER in percent relatively to the device threshold age value DTA is calculated to allow stress intensity evaluation of each device. The normalized threshold exceeding value TE therefore produces a value (the threshold exceeding rate TER) which is in the same scale for each device and can be then compared to each other.

The next step is to determine a global stress state value by summing all threshold exceeding rates TER (or calculating an average of the threshold exceeding rates TER). This global stress state value can be then compared with a global threshold value to determine the global stress state of the system on chip.

| Devices / system on chip | Device threshold age value DTA | Current stress state value ST | Threshold exceeding value TE | Threshold exceeding rate TER |
|---|---|---|---|---|
| D1 | 20 | 15 | 0 | 0 |
| D2 | 35 | 40 | 5 | 14 % |
| D3 | 80 | 120 | 40 | 50 % |
| Sum (chip) | | | | 64 % |

The binary values or the string of binary values representing the stress state values of several devices or the global system on chip stress state value may be stored in a secure memory M such as a non volatile memory, a random access memory or a register monitored by the aging controller AGC. These values may be used for cryptographic purposes to form a unique key to perform cryptographic computations that allow for example the chip to acquire rights in a conditional access system.

The ring oscillator fuse ROF of one embodiment of the invention operates according to three operating modes as illustrated by figure 3:
- Off mode: the ring oscillator fuse ROF is inactive for example when the power supply is off
- Read mode: the ring oscillator fuse ROF operates under normal conditions.
- Stress mode: The ring oscillator fuse ROF operates under stress conditions at high temperature or over-voltage for example.

According to figure 3, a nominal initial frequency fᵢₙᵢₜ of the oscillator is measured and stored at manufacturing of the chip. The frequency decreases with the time from its initial value fᵢₙᵢₜ according to slopes depending on the stress intensity and time applied on the ring oscillator fuse ROF. The stress thus accelerates the aging as shown by dashed line segments in figure 3. After a given time, the frequency of a stressed ring oscillator fuse ROF becomes significantly lower than the frequency of an unstressed ring oscillator fuse ROF represented by continuous line segments by showing a difference ΔF.

A system on chip may feature several thousand ring oscillator fuses ROF which may be used to determine a large number of data bits indicating the stress status of each devices associated with a ring oscillator fuse ROF. Since ring oscillators may be implemented using standard library cells (elementary CMOS inverters), their integration is seamless and may be freely combined with other available cores.

According to the diagram of figure 1, each device D1, D2, D3 of the system on chip SOC is provided by a ring oscillator fuse ROF1, ROF2, ROF3 respectively which may be stressed individually according to the characteristics of each device D1, D2, D3. A global stress state value may thus be represented by a binary string of three bit with one bit for each device. In the example, a binary string [100] means that the first device D1 has reached the age set by the threshold TA on the second comparator CP2 while the ring oscillator fuses ROF of the other devices D2, D3 have not been stressed sufficiently to reach the threshold age value. The first device D1 may be disabled by the aging controller AGC so that some functionalities of the system on chip may be considered as expired.

The binary value of the string obtained after a certain operating time and stress, corresponding to a global stress state value of the system on chip, may be exploited by a management center or a client support service which may act on the behavior of the apparatus using the system on chip. The global stress state may also be used to determine for example devices stress levels for system or apparatus usage history allowing defining necessity of a hardware and / or software update.

According to an embodiment, the aging controller AGC may control signal timing parameters such as transition time or propagation time of signals produced by a device of the system on chip instead a frequency of a signal generated by an oscillator associated to the device. The transition time of a digital signal corresponds to the time taken by the signal to pass from a low to a high state or vice versa. The propagation time corresponds to the time taken by a digital signal to flow from a first location in a circuit to a second location, this time being measured as a time shift between the two locations. Beside the decrease of an oscillator frequency, a consequence of the aging of a circuit including semiconductors is an increase of the signal transition time or the signal propagation time in relation with a corresponding reference signal.

In this case, the aging controller stresses devices, during a predetermined time or periodically, by increasing their activity rate with a higher power supply voltage or current for example. Instead of frequency values, the aging controller compares signal timing measured in a stressed device with corresponding timing of a reference signal produced by a device not submitted to stress.

The method and the aging controller as described above are applicable in an efficient way in many kinds of apparatuses wherein expiries of devices or functionalities have to be managed selectively for security purposes.

According to an embodiment of the method of the invention, each device comprises an individual threshold age value DTA, the encoding of each device stress state value comprises steps of:
comparing a current stress state value ST of each device with the threshold age value DTA of said device,
if the current stress state value ST is lower than the threshold age value DTA, setting a threshold exceeding value TE to zero,
if the current stress state value ST is equal or higher than the threshold age value DTA, producing a threshold exceeding value TE,
normalizing the threshold exceeding value TE in respect to the threshold age value DTA to obtain a threshold exceeding rate TER for each device,
determining a global stress state value by calculating a sum or an average value of the threshold exceeding rates TER of each device,
comparing the global stress state value with a global threshold value to determine a global stress state of the system on chip, and modifying the global behavior of said system on chip if the global stress state value is equal or higher than the global threshold value.

## Claims

1. A method to control aging of a system on chip comprising one or more devices including semiconductor circuit components and at least one aging controller in charge of monitoring electrical signals circulating inside the system on chip, each device having a plurality of operating modes, the method is **characterized in that** it comprises steps of:
- stressing, by the aging controller, at least one device of the system on chip by varying hardware parameters related to operating modes of said at least one device,
- comparing, by the aging controller, at least one parameter associated to an electrical signal produced by the at least one device with a reference parameter to determine a difference corresponding to an operating age value of the at least one device,
- if the operating age value equals or exceeds a predetermined threshold age value, determining a stress state value,
- encoding the stress state value as a binary value associated to each device, and modifying the operating mode of the at least one device or a global behavior of the system on chip according to an array of values formed by one or more binary values.

2. The method according to claim 1, **characterized in that** the aging controller comprises an oscillator circuit associated to at least one device, generating a signal having a frequency that decreases with the device operating time and applied stress, said frequency being compared with a reference frequency for determining a difference corresponding to an operating age value of the at least one device.

3. The method according to claim 2, **characterized in that** the oscillator circuit comprises a ring oscillator made up of a chain including an odd number of CMOS inverters connected in series where the output of the last inverter is fed back as input of the first inverter.

4. The method according to claim 2 or 3, **characterized in that** the oscillator circuit is stressed, during a predetermined time or within time periods, with commands managing hardware parameters variations comprising a DC over-voltage, an AC voltage bias, a current increase in a resistor inducing a higher temperature than a normal operating temperature or a combination thereof.

5. The method according to anyone of claim 2 to 4, **characterized in that** a value of the reference frequency is either initially stored in a non-volatile set up memory of the system on chip or provided by a clock signal generated by a reference generator, said generator being placed inside or outside the system on chip.

6. The method according to anyone of claim 1 to 5, **characterized in that** the array of values forms a binary string representing the stress state values associated to a plurality of devices, the binary string being stored in a secure memory monitored by the aging controller and used to form a unique key to perform cryptographic computations.

7. The method according to claim 1, **characterized in that** the aging controller controls signal timing parameters comprising transition time or propagation time of signals produced by at least one device of the system on chip, said signal timing parameters increasing with the device operating time and applied stress, said signal timing parameters of a stressed device being compared with a reference signal for determining a difference corresponding to an operating age value of the at least one device.

8. A system on chip configured to control aging of one or more devices including semiconductor circuit components, and at least one aging controller monitoring electrical signals circulating inside the system on chip, each device having a plurality of operating modes, the system is **characterized in that** the aging controller is configured to:
stress at least one device of the system on chip, by varying hardware parameters related to operating modes of said at least one device,
compare at least one parameter associated to an electrical signal produced by the at least one device with a reference parameter to determine a difference corresponding to an operating age value of the at least one device,
determine a stress state value if the operating age value equals or exceeds a predetermined threshold age value,
encode the stress state value as a binary value associated to each device, and to modify the operating mode of the at least one device or a global behavior of the system on chip according to an array of values formed by one or more binary values.

9. The system on chip according to claim 8, **characterized in that** the aging controller comprises an oscillator circuit configured to generate a signal having a frequency that decreases with the device operating time and applied stress, the aging controller being further configured to compare said frequency with a reference frequency and to determine a difference corresponding to an operating age value of the at least one device.

10. The system on chip according to claim 9, **characterized in that** the oscillator circuit comprises a ring oscillator made up of a chain including an odd number of CMOS inverters connected in series where the output of the last inverter is fed back as input of the first inverter.

11. The system on chip according to claim 9 or 10, **characterized in that** the stress of the oscillator circuit includes commands acting, during a predetermined time or within time periods, on hardware parameters variations comprising a DC over-voltage, an AC voltage bias, a current increase in a resistor inducing a higher temperature than a normal operating temperature or a combination thereof.

12. The system on chip according to anyone of claim 9 to 11, **characterized in that** a value of the reference frequency is either initially stored in a non-volatile set up memory of the system on chip or provided by a clock signal generated by a reference generator placed inside or outside the system on chip.

13. The system on chip according to anyone of claim 9 to 12, **characterized in that** the array of values forms a binary string representing the stress state values associated to a plurality of devices, the binary string, being stored in a secure memory monitored by the aging controller, is configured to be used as a unique key to perform cryptographic computations.

14. The system on chip according to claim 8, **characterized in that** the aging controller is configured to control signal timing parameters comprising transition time or propagation time of signals produced by at least one device of the system on chip, said signal timing parameters increasing with the device operating time and stress applied during a predetermined time or within time periods, the aging controller being further configured to compare signal timing parameters of a stressed device with the signal timing parameters of a reference signal and determine a difference corresponding to an operating age value of the at least one device.

15. An aging controller comprising at least one ring oscillator circuit intended to be associated to a device of a system on chip, said device having a plurality of operating modes, the ring oscillator circuit being made up of a chain including an odd number of CMOS inverters connected in series where the output of the last inverter is fed back as input of the first inverter, the aging controller is **characterized in that** it further comprises:
- an input interface configured to receive stressing commands acting on hardware parameters related to operating modes of the ring oscillator circuit,
- a first comparator configured to compare the signal frequency with a reference frequency and to determine a difference showing a decrease of the signal frequency corresponding to an operating age value of the ring oscillator,
- a second comparator configured to compare the operating age value with a threshold age value and to output a stress state value intended to modify the operating mode of the device of the system on chip.
